# DEMANDE DE BREVET EUROPEEN

(11) **EP 1 613 073 A1**
(43) Date de publication de la demande: **04.01.2006**
(21) Numéro de dépôt: 05291398.5
(22) Date de dépôt: 29.06.2005
(51) Int. Cl.: H04N 5/765

(54) **Station d'accueil d'un lecteur multimédia**

(30) Priorité: 29.06.2004 FR 0407172
(71) Demandeur: Archos, 91430 Igny (FR)
(72) Inventeur: Crohas, Henri, 91370 Verrieres Le Buisson (FR)
(74) Mandataire: Mazabraud, Xavier

(57) **Abrégé**

L'invention concerne une station d'accueil (1) pour lecteur multimédia portable (2). La station d'accueil (1) comprend au moins :
- une entrée audio et une entrée vidéo (9) pour recevoir des signaux audio et vidéo analogiques,
- une sortie audio et une sortie vidéo (8) pour transmettre des signaux audio et vidéo analogiques vers un appareil externe (14), et
- des moyens de connexion (6) pour transmettre les signaux en provenance des entrées de la station d'accueil (1) vers le lecteur multimédia (2) pour enregistrement, et pour transmettre des signaux en provenance du lecteur multimédia (2) vers les sorties de la station d'accueil (1).

## Description

La présente invention se rapporte à une station d'accueil ou "cradle" en langue anglaise, pour recevoir un lecteur multimédia portable doté de moyens de stockage numérique et de moyens de diffusion audio et vidéo.

On connaît des stations d'accueil pour téléphone portable ou pour agenda numérique. Ces stations sont destinées à recharger ces appareils et/ou à les relier à un micro ordinateur via des connexions numériques de type USB par exemple.

La présente invention a pour but une nouvelle station d'accueil destinée aux lecteurs numériques multimédia portables, en particulier ceux présentant de nombreuses entrées et sorties. L'invention a aussi pour but de faciliter la connexion entre la station d'accueil et un lecteur numérique, fournir un support fixe et aisé, et faciliter l'usage du lecteur par l'ajout de connexions et fonctions adéquates.

On atteint au moins l'un des buts précités avec une station d'accueil pour lecteur multimédia portable, ce lecteur étant doté de moyens de conversion analogique-numérique, de moyens d'enregistrement pour enregistrer des signaux numériques dans des moyens de stockage numérique et de moyens de diffusion audio et vidéo. Le lecteur multimédia est de type autonome et portable tenant dans la main, "handheld" en langue anglaise. Les moyens d'enregistrement peuvent comprendre un microprocesseur associé à un système d'exploitation dédié. La station d'accueil comprend au moins
- une entrée audio et une entrée vidéo pour recevoir des signaux audio et vidéo analogiques,
- une sortie audio et une sortie vidéo pour transmettre des signaux audio et vidéo analogiques vers un appareil externe, et
- des moyens de connexion, d'une part pour transmettre les signaux en provenance des entrées de la station d'accueil vers le lecteur multimédia pour enregistrement, et d'autre part pour transmettre des signaux en provenance du lecteur multimédia vers les sorties de la station d'accueil.

Les signaux audio et vidéo analogiques peuvent être de type bande de base, composite, S-vidéo, ou autre, et transiter dans des connecteurs correspondants.

Les moyens de connexion peuvent avantageusement comprendre un câble unique comportant un faisceau de fils conducteurs pour la transmission de signaux depuis et vers le lecteur multimédia, l'extrémité libre du câble comprenant un connecteur doté de plusieurs fiches destinées à venir en prise avec des fiches correspondantes du lecteur multimédia. A titre d'exemple non limitatif, l'ensemble des fiches du connecteur présente un encombrement réduit de sensiblement 3 cm² ou moins(par vue de face).

Avec la station d'accueil selon l'invention, le lecteur multimédia peut aisément se connecter à des appareils analogiques de diffusion audio et/ou vidéo tels qu'une télévision (TV), un amplificateur audio, une chaîne HiFi, un magnétoscope (VCR), une set top box câble ou satellite,... Avec un unique câble, le branchement se limite à une unique opération de connexion. Au contraire dans l'art antérieur, la connexion d'un lecteur multimédia audio/vidéo avec par exemple un téléviseur et un récepteur satellite par exemple nécessitait de nombreux branchements. Avec la station d'accueil selon l'invention, les branchements entre la station d'accueil peuvent être effectués une fois pour toutes. Et lorsqu'on souhaite utiliser le lecteur multimédia, il suffit de le poser sur la station d'accueil et de brancher l'unique câble : gain de temps et grande efficacité puisque le risque de se tromper dans les branchements est nul.

Par ailleurs, les moyens de connexion peuvent comprendre des liaisons métalliques aptes à directement transmettre les signaux provenant des entrées audio et vidéo vers le lecteur multimédia. Les signaux ne font que transiter via la station d'accueil qui ne comporte alors aucune intelligence pour les modifier.

Par ailleurs, la station d'accueil comprend en outre une entrée d'alimentation apte à recevoir l'alimentation du secteur via un câble d'alimentation, à alimenter la station d'accueil et à alimenter le lecteur multimédia via les moyens de connexion.

Avantageusement, la station d'accueil peut comprendre en outre une entrée infrarouge constituée par un récepteur infrarouge apte à recevoir des signaux de commande infrarouge provenant d'une télécommande du lecteur multimédia.

En particulier, la station d'accueil comprend en outre un convertisseur analogique numérique pour convertir les signaux de commande provenant du récepteur infrarouge en signaux de commande numériques transmis vers le lecteur multimédia via les moyens de connexions. Le lecteur multimédia reçoit et traite, pour son fonctionnement propre, les signaux de commande envoyés par la télécommande.

Avantageusement, la station d'accueil comprend également un convertisseur numérique analogique pour convertir des signaux de commande provenant du lecteur multimédia via les moyens de connexion en signaux de commande analogiques transmis vers un appareil externe. Pour ce faire, la station d'accueil comprend une sortie électrique dite sortie infrarouge recevant les signaux de commande analogiques depuis le convertisseur numérique analogique. Un câble électrique, connecté à la sortie infrarouge, permet de transporter les signaux de commande analogiques, ce câble comprenant à son extrémité une pastille infrarouge de conversion électrique-infrarouge fixée proche, de préférence en vis-à-vis, des moyens de réception infrarouge de l'appareil externe. Plus précisément, le signal infrarouge en provenance du lecteur multimédia peut être apte à commander un tuner de l'appareil externe. D'une façon générale, la sortie infrarouge peut être utilisée pour commander tout autre appareil externe. On peut ainsi commander un appareil externe connecté en sortie de la station d'accueil, mais on peut aussi commander un appareil externe utilisé comme source audio/vidéo et qui est connecté en entrée de la station d'accueil.

La présente invention est notamment remarquable par le fait que l'utilisateur peut utiliser la télécommande du lecteur multimédia pour commander de nombreuses fonctions de l'appareil externe. Par exemple, on peut régler la qualité de l'image et la qualité du son ou autre. On se sert alors d'une unique télécommande. Pour l'utilisateur tout est transparent. En fait, le lecteur multimédia renferme une table de correspondance entre les codes infrarouges pour commander les fonctions de l'appareil externe et ses propres codes infrarouges. Ainsi, certains signaux de commande sont reçus, interprétés puis convertis en signaux de commande pour l'appareil externe.

Selon une caractéristique avantageuse de l'invention, la station d'accueil comprend en outre un réceptacle pour recevoir le lecteur multimédia. Ce réceptacle est conçu de façon pivotante par rapport au reste de la station d'accueil constitué d'une embase portant les entrées et sorties de la station d'accueil. Ce réceptacle comporte un logement dans lequel vient se loger partiellement le lecteur multimédia en position "debout".

Selon l'invention, lorsque la station d'accueil est posée sur un plan horizontal, l'axe de pivot du réceptacle est légèrement incliné, par exemple avec un angle de 30°, par rapport à la verticale, de telle sorte que le réceptacle présente une première position où le lecteur multimédia est posé à la verticale et une seconde position après pivotement (du réceptacle) de 180° où le lecteur multimédia est incliné par rapport à la verticale. De cette façon, l'utilisateur peut régler l'inclinaison de l'écran de visualisation présent sur le lecteur multimédia.

Avec un tel réceptacle rotatif, les informations affichées sur l'écran du lecteur multimédia sont rendues visibles quelque soit la position de l'utilisateur.

La station d'accueil peut présenter des dimensions telles qu'elle tient dans la main, "handheld" en langue anglaise. De ce fait, elle est portative.

D'autres avantages et caractéristiques de l'invention apparaîtront à l'examen de la description détaillée d'un mode de mise en oeuvre nullement limitatif, et des dessins annexés, sur lesquels :
- La figure 1 est une vue de la station d'accueil seule selon l'invention,
- La figure 2 est une vue de côté de la station d'accueil avec le lecteur en position debout selon l'invention,
- La figure 3 est une vue de côté de la station d'accueil avec le lecteur en position inclinée selon l'invention,
- La figure 4 est une vue de dessus de la station d'accueil avec le lecteur en position debout selon l'invention,
- La figure 5 est une vue générale d'un exemple d'utilisation de la station d'accueil selon l'invention, et
- La figure 6 est une vue schématique simplifiée de l'intérieur de la station d'accueil.

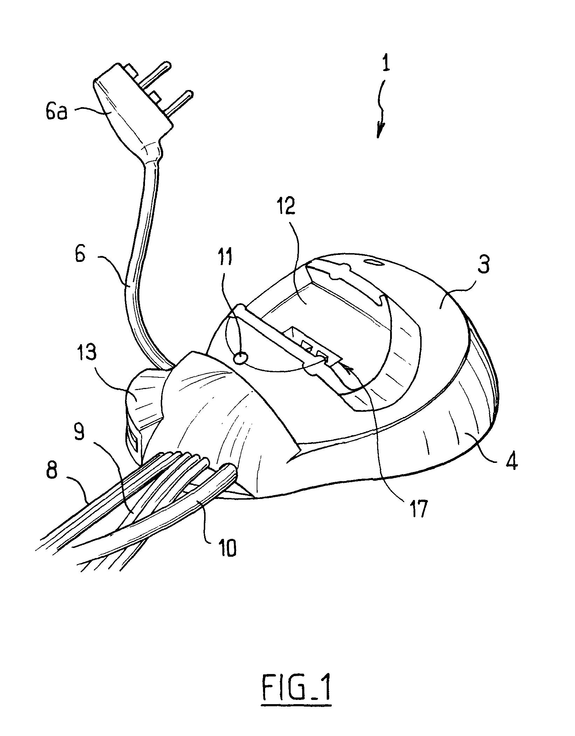

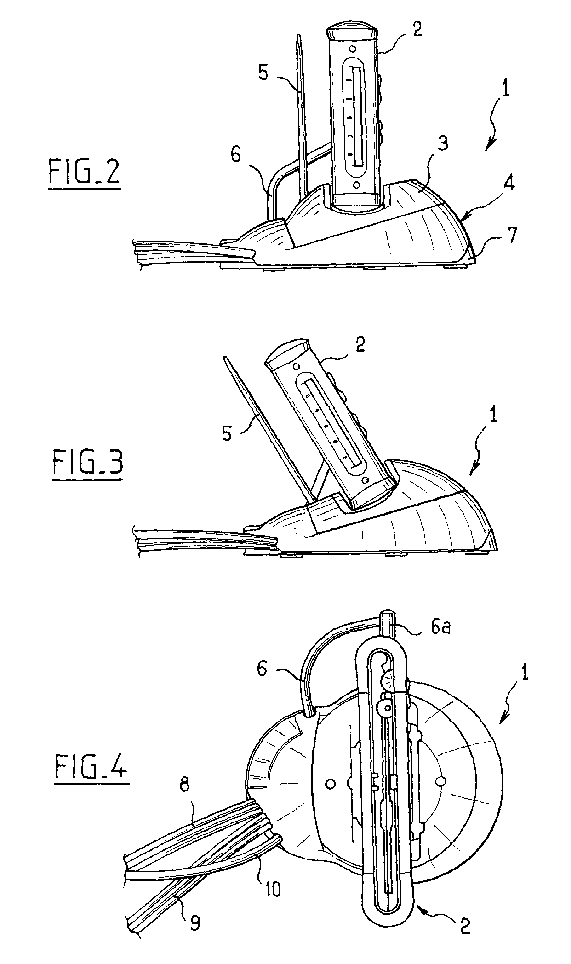

Sur la figure 1 on distingue la station d'accueil 1 comprenant un réceptacle 3 pivotant par rapport à une embase 4 fixe disposée en dessous du réceptacle. Un logement 12 est prévu sur la partie supérieure du réceptacle 3. Ce logement 12 est conçu de façon à recevoir partiellement et maintenir en position debout un lecteur multimédia portable audio/vidéo 2 comme on le voit sur les figures 2 à 4. Une partie inférieure du lecteur 2 est insérée dans le logement 12. Le réceptacle comporte également un orifice 11 apte à recevoir un stylet 5 dudit lecteur multimédia 2.

L'embase 4 comporte des premiers moyens de connexion 6 sous forme d'un câble de connexion comprenant à son extrémité un connecteur 6a destiné à s'enficher dans des fiches correspondantes disposés sur une face latérale du lecteur multimédia 2. Le câble 6 permet de transporter des signaux audio/vidéo depuis et vers le lecteur multimédia, l'alimentation vers le lecteur multimédia, des signaux de données depuis le lecteur multimédia, ainsi que des signaux de commande depuis et vers le lecteur multimédia. En variante, on peut aussi envisager des premiers moyens de connexions (non représentés) sous forme d'un connecteur disposé dans le logement 12 et apte à s'engager dans un connecteur (non représenté) correspondant disposé sur la partie insérée du lecteur multimédia 2.

Dans le cas où la station d'accueil est portable ("handheld"), en position de transport, le connecteur 6a disposé à l'extrémité du câble 6 vient se loger dans des orifices 17, sur la figure 1, disposés dans le logement 12.

Le réceptacle 3 peut pivoter d'une position dite debout comme on le voit sur la figure 2 vers une position inclinée comme on le voit sur la figure 3. Dans la position debout, le lecteur multimédia est maintenu à la vertical. Son écran de visualisation qui est disposé sur une face reste verticale, à 90° du plan horizontal sur lequel est posé la station d'accueil. Dans la position inclinée, l'écran de visualisation du lecteur est incliné vers le haut à environ 60° du plan horizontal. Un utilisateur peut ainsi choisir la position la mieux adaptée pour visualiser l'écran du lecteur multimédia. Pour passer d'une position à l'autre, il suffit de faire pivoter le réceptacle de 180°.

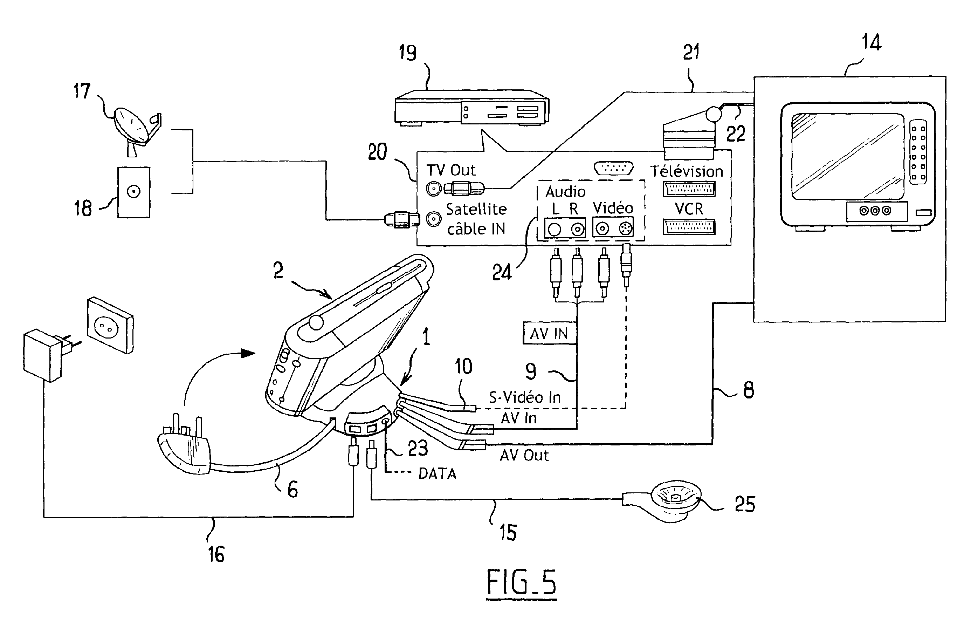

L'élément 13 renferme trois prises pour l'alimentation, la commande infrarouge et une commande Data comme on le verra sur la figure 5.

Les moyens de connexion 8 et 9 sont des câbles aptes à transporter des signaux audio/vidéo. Le câble 8 comprend deux fils pour transporter des signaux audio et un fil pour transporter des signaux vidéo de type composite. Ce câble 8 constitue les sorties audio/vidéo (AV OUT) de la station d'accueil. De même le câble 9 comprend deux fils pour transporter des signaux audio et un fil pour transporter des signaux vidéo de type composite. Ce câble 9 constitue les entrées audio/vidéo (AV IN) de la station d'accueil. Le câble 10 constitue une seconde sortie vidéo apte à transporter des signaux vidéo de type S-Vidéo (S-video IN).

Un exemple d'utilisation de la station d'accueil selon l'invention est illustré sur la figure 5. On distingue la station d'accueil 1 posée par exemple sur un plan de meuble proche d'un récepteur satellite 19 et d'un téléviseur (TV) 14. Le récepteur satellite 19 est prévu pour recevoir les signaux de télévision provenant d'une parabole de réception 17 disposée sur le toit d'une maison par exemple. L'élément 19 peut aussi bien être un récepteur câble, ou cable-box en langue anglaise, pour la réception notamment de chaînes de télévision depuis le câble 18.

Les signaux de télévision en provenance de la parabole 17 sont éventuellement traités puis transmis vers le téléviseur 14. Par exemple, la liaison entre le récepteur satellite 19 et le téléviseur 14 est obtenue de façon conventionnelle au moyen d'un câble d'antenne 21 et d'un câble péritel (ou scart) 22 qui, depuis le téléviseur 14 viennent s'enficher dans des connecteurs correspondants disposés sur la face arrière 20 du récepteur satellite 19. L'homme du métier comprendra aisément que d'autres appareils peuvent être utilisés à la place du récepteur satellite 19 et d'autres types de liaison, notamment en Amérique du nord, peuvent être utilisées entre le récepteur et le téléviseur.

Avec l'exemple de la figure 5, on désire par exemple enregistrer les chaînes de télévision provenant du récepteur satellite 19 dans le lecteur multimédia 2. Pour ce faire, le câble 9 d'entrée audio/vidéo est connecté à des sorties audio/vidéo 24 disposées sur la face arrière 20 du récepteur satellite 19. Plus précisément, le câble 9 comporte trois connecteurs, un premier connecteur vidéo de couleur jaune et deux connecteurs de couleur rouge et blanc pour le son stéréo droite-gauche. Pour la vidéo, on peut aussi brancher le câble d'entrée S-vidéo 10 dans une fiche correspondante des sorties 24. Dans ce cas, on débranche le connecteur vidéo du câble 9. Le flux des signaux audio/vidéo transite donc depuis le récepteur satellite 19 via la station d'accueil 1, le câble 6 jusqu'au lecteur multimédia 2 où il est enregistré en continu et en temps réel. Les signaux enregistrés dans le lecteur multimédia 2 peuvent ensuite être visualisés dans le téléviseur 14 via le câble de sortie 8 (AV OUT). Ce câble 8 est connecté au téléviseur 14 soit directement au moyen de trois connecteurs (un pour la vidéo composite et deux pour le son stéréo), soit au moyen d'un adaptateur péritel (non représenté) recevant les trois connecteurs et s'enfichant dans une prise péritel à l'arrière du téléviseur 14.

Le câble 8 est adapté pour transmettre des images (album photos), de la vidéo et de l'audio contenues dans le lecteur multimédia 2 vers tout appareil de restitution vidéo et/ou sonore.

Le câble d'alimentation 16, d'une part branché au secteur et, d'autre part connecté à une entrée dédiée (DC IN) de la station d'accueil 1, permet d'alimenter à la fois la station d'accueil et le lecteur multimédia 2.

Le connecteur 23 peut être utilisé comme une entrée ou une sortie de données (DATA). On peut par exemple envisager de connecter un second lecteur, un clavier ou autre.

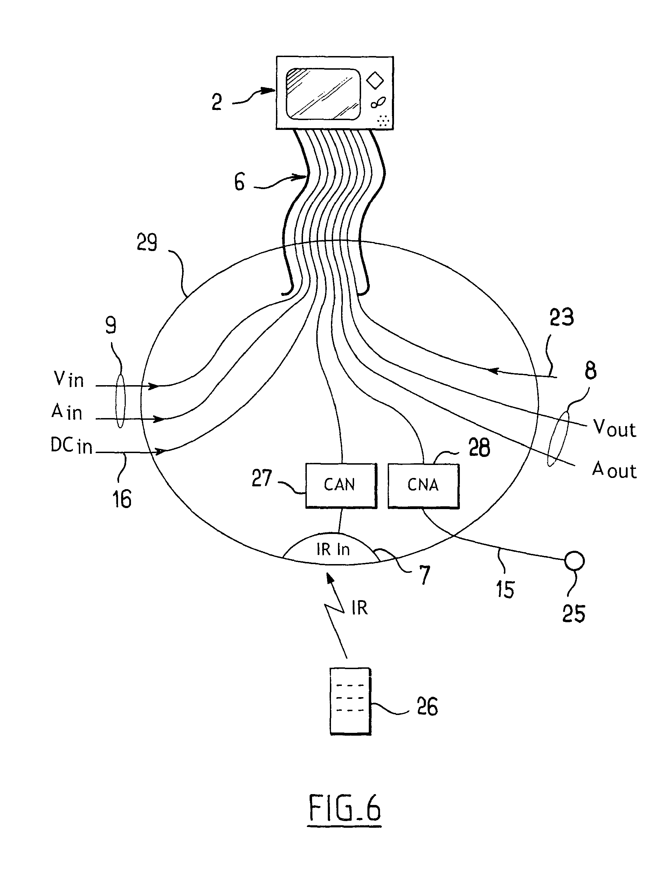

Par ailleurs, l'embase 4 comporte également un récepteur infrarouge 7 (sur la figure 2) apte à recevoir des signaux de commande infrarouge en provenance d'une télécommande 26 (figure 6) et destinés au lecteur multimédia 2. Le lecteur multimédia 2 peut être programmé pour effectuer des enregistrements à des moments prédéterminés. Dans ce cas, il doit être capable de commander le tuner du récepteur satellite de façon à sélectionner la chaîne devant être enregistrée. Pour ce faire, un câble 15 est connecté à une sortie de la station d'accueil 1. Il permet de transmettre des signaux de commande infrarouge vers le récepteur satellite 19. En particulier ce câble 15 comporte à son extrémité libre une pastille 25 que l'on fixe à proximité d'un récepteur infrarouge du récepteur satellite 19. Cette pastille comporte un convertisseur de signal électrique-infrarouge.

La figure 6 est un schéma bloc très simplifié d'un exemple de l'intérieur d'une station d'accueil. On distingue une carte électronique, illustrée ici par le cercle 29, essentiellement constituée de câblage pour relier les entrées 7, 9, 23 et 16, les sorties 8 et 15, au lecteur multimédia 2. Pour les entrées et sorties 16, 9, 23 et 8, la liaison est directe par simple câblage. Les signaux ne sont pas traités au sein de la station d'accueil Seule une partie de l'alimentation est utilisée pour la station d'accueil. Toutes les entrées/sorties (sauf le récepteur infrarouge 7) peuvent être a priori de type prise ou fil.

La télécommande 26 permet de commander le lecteur multimédia 2. via la station d'accueil. Pour ce faire, le récepteur infrarouge 7 (IR IN) génère un signal analogique qui est converti en signal numérique série au moyen d'un convertisseur analogique-numérique 27 avant transmission vers le lecteur multimédia. De la même manière, le signal numérique série de commande provenant du lecteur multimédia est converti en signal analogique par le convertisseur numérique analogique 28 avant transmission vers la pastille 25 via le câble 15.

Les différents câblages sont contenus dans un unique câble 6 connecté au lecteur multimédia au moyen d'un connecteur 6a dédié.

Bien sûr, l'invention n'est pas limitée aux exemples qui viennent d'être décrits et de nombreux aménagements peuvent être apportés à ces exemples sans sortir du cadre de l'invention. On peut par exemple envisager une entrée/sortie de type USB dans la station d'accueil. Dans ce cas le connecteur 6a serait adapté pour comporter un prise USB à enficher dans une prise USB correspondante du lecteur multimédia.

## Revendications

1. Station d'accueil pour lecteur multimédia portable, ce lecteur étant doté de moyens de conversion analogique-numérique, de moyens d'enregistrement pour enregistrer des signaux numériques dans des moyens de stockage numérique et de moyens de diffusion audio et vidéo; la station d'accueil comprenant au moins :
- une entrée audio et une entrée vidéo pour recevoir des signaux audio et vidéo analogiques,
- une sortie audio et une sortie vidéo pour transmettre des signaux audio et vidéo analogiques vers un appareil externe, et
- des moyens de connexion pour transmettre les signaux en provenance des entrées de la station d'accueil vers le lecteur multimédia pour enregistrement, et pour transmettre des signaux en provenance du lecteur multimédia vers les sorties de la station d'accueil.

2. Station d'accueil selon la revendication 1, **caractérisée en ce que** les moyens de connexion comprennent un câble unique comportant un faisceau de fils conducteurs pour la transmission de signaux depuis et vers le lecteur multimédia, l'extrémité libre du câble comprenant un connecteur doté de plusieurs fiches destinées à venir en prise avec des fiches correspondantes du lecteur multimédia.

3. Station d'accueil selon la revendication 2, **caractérisée en ce que** l'ensemble des fiches du connecteur présente un encombrement réduit de sensiblement 3 cm² ou moins.

4. Station d'accueil selon l'une quelconque des revendications précédentes, **caractérisée en ce que** les moyens de connexion comprennent des liaisons métalliques aptes à directement transmettre les signaux provenant des entrées audio et vidéo vers le lecteur multimédia.

5. Station d'accueil selon l'une quelconque des revendications précédentes, **caractérisée en ce qu'**elle comprend en outre une entrée d'alimentation apte à recevoir l'alimentation du secteur via un câble d'alimentation, à alimenter la station d'accueil et à alimenter le lecteur multimédia via les moyens de connexion.

6. Station d'accueil selon l'une quelconque des revendications précédentes, **caractérisée en ce qu'**elle comprend en outre une entrée infrarouge constituée par un récepteur infrarouge apte à recevoir des signaux de commande infrarouge provenant d'une télécommande du lecteur multimédia.

7. Station d'accueil selon la revendication 6, **caractérisée en ce qu'**elle comprend en outre un convertisseur analogique numérique pour convertir les signaux de commande provenant du récepteur infrarouge en signaux de commande numériques transmis vers le lecteur multimédia via les moyens de connexions.

8. Station d'accueil selon l'une quelconque des revendications précédentes, **caractérisée en ce qu'**elle comprend en outre un convertisseur numérique analogique pour convertir des signaux de commande provenant du lecteur multimédia via les moyens de connexion en signaux de commande analogiques transmis vers un appareil externe.

9. Station d'accueil selon la revendication 8, **caractérisée en ce qu'**elle comprend en outre une sortie électrique dite sortie infrarouge recevant les signaux de commande analogiques depuis le convertisseur numérique analogique, et **en ce qu'**elle comprend également un câble électrique, connecté à la sortie infrarouge, pour transporter les signaux de commande analogiques, ce câble comprenant à son extrémité une pastille infrarouge de conversion électrique-infrarouge fixée proche des moyens de réception infrarouge de l'appareil externe.

10. Station d'accueil selon la revendication 8 ou 9, **caractérisée en ce que** les signaux de commande sont aptes à commander un tuner de l'appareil externe.

11. Station d'accueil selon l'une quelconque des revendications précédentes, **caractérisée en ce qu'**elle comprend en outre un réceptacle pour recevoir le lecteur multimédia.

12. Station d'accueil selon l'une quelconque des revendications précédentes, **caractérisée en ce que** le réceptacle est conçu de façon pivotante par rapport au reste de la station d'accueil.

13. Station d'accueil selon la revendication 12, **caractérisée en ce que** lorsque la station d'accueil est posée sur un plan horizontal, l'axe de pivot du réceptacle est légèrement incliné par rapport à la verticale, de telle sorte que le réceptacle présente une première position où le lecteur multimédia est posé à la verticale et une seconde position après pivotement de 180° où le lecteur multimédia est incliné par rapport à la verticale.

14. Station d'accueil selon l'une quelconque des revendications précédentes, **caractérisée en ce qu'**elle présente des dimensions telles qu'elle tient dans la main.
